# EUROPEAN PATENT APPLICATION

(11) **EP 4 539 248 A1**
(43) Date of publication of application: **16.04.2025**
(21) Application number: 23915691.2
(22) Date of filing: 03.11.2023
(51) Int. Cl.: H01Q 1/36

(54) **RADIATING ELEMENT AND BASE STATION ANTENNA**

(30) Priority: 13.01.2023 CN 202310069081
(71) Applicant: CICT Mobile Communication Technology Co., Ltd., Canglong Island, Jiangxia District Wuhan, Hubei 430205 (CN)
(72) Inventor: LV, Chenfei, Wuhan, Hubei 430205 (CN); PAN, Lijun, Wuhan, Hubei 430205 (CN); LI, Huimin, Wuhan, Hubei 430205 (CN); HUANG, Hui, Wuhan, Hubei 430205 (CN)
(74) Representative: Studio Torta S.p.A.
(86) International application number: PCT/CN2023/129639
(87) International publication number: WO 2024/148933

(57) **Abstract**

The present application relates to the technical field of communication products. Provided are a radiating element and a base station antenna. The radiating element comprises a first dielectric substrate, radiating arms, coupling pieces, baluns and a base, wherein four pairs of radiating arms are orthogonally distributed on the first dielectric substrate; each pair of radiating arms is arranged on two opposite sides of the first dielectric substrate; the coupling pieces are arranged between two adjacent pairs of radiating arms; coupling feed is performed between the radiating arms and the baluns; the baluns are connected to the base in a feeding manner; each pair of radiating arms is irregularly annular; and sawteeth are arranged at the end of each radiating arm away from the center of the first dielectric substrate.

## Description

### CROSS-REFERENCES TO RELATED APPLICATIONS

The present application claims priority to Chinese patent application No. 202310069081X filed on January 13, 2023, entitled "Radiating Element and Base Station Antenna", which is hereby incorporated by reference in its entirety.

### FIELD

The present application relates to the field of communication product, and in particular, to a radiation unit and a base station antenna.

### BACKGROUND

Base station antenna is a very important component in a mobile communication system. With the development of 5th generation mobile communication technology (5G), the base station antenna also requires change and upgrade. The requirements for communication information exchange are growing currently, and the requirements for channel capacity of base station antenna are getting higher. One important manner for the base station antenna to expand the channel capacity is to expand the bandwidth. How to expand the bandwidth of base station antenna is always a research hotspot, and a broadband antenna may better solve the growing communication requirements.

Traditional base station antennas are in the 3.5 gigahertz (GHz) frequency band, with narrow bandwidth and a single type of radiation surface form, which makes it difficult to be applied to a wider frequency band.

### BRIEF SUMMARY

The present application provides a radiation unit and a base station antenna to solve a defect that a bandwidth of a frequency band of a base station antenna is narrow in the related art.

The present application provides a radiation unit, including a first dielectric substrate plate, four pairs of radiation arms, four couple sheets, two baluns and a base, where the four pairs of radiation arms are orthogonally disposed at the first dielectric substrate plate, each pair of the radiation arms are disposed at two opposite sides of the first dielectric substrate plate, each of the couple sheets is disposed between two adjacent pairs of the radiation arms, the four pairs of radiation arms are coupled and fed with the two baluns, the two baluns are connected to the base for connection with feed, each pair of the radiation arms is in an irregular ring shape, and an end of the radiation arms away from a center of the first dielectric substrate plate is provided with serration structure.

According to the radiation unit provided by an embodiment of the present application, the first dielectric substrate plate is in a square shape, and the radiation arms extend along diagonal lines of the first dielectric substrate plate.

According to the radiation unit provided by an embodiment of the present application, the couple sheets are in a triangular shape, a rectangular shape or an annular shape, and the couple sheets are coupled with the radiation arms through gaps.

According to the radiation unit provided by an embodiment of the present application, the two baluns are orthogonally disposed, an end of each of the baluns is insertedly connected to the base, and another end of each of the baluns is insertedly connected to the first dielectric substrate plate.

According to the radiation unit provided by an embodiment of the present application, the base includes a second dielectric substrate plate, a feed circuit and a ground circuit, where the feed circuit is disposed at a first side of the second dielectric substrate plate for connecting to an external cable, a second side of the second dielectric substrate plate is provided with a ground layer, and the ground circuit is connected to the feed circuit and the ground layer.

According to the radiation unit provided by an embodiment of the present application, each of the baluns includes a third dielectric substrate plate and a feed line, where the feed line is disposed at a first side of the third dielectric substrate plate, the feed line is connected to the feed circuit, a second side of the third dielectric substrate plate is provided with a ground connection layer, and the ground connection layer is connected to the ground layer.

According to the radiation unit provided by an embodiment of the present application, both the feed circuit and the feed line are microstrip lines or strip lines.

According to the radiation unit provided by an embodiment of the present application, the radiation unit further includes a director with sheet-like structure and support columns, where the director with sheet-like structure is mounted at the first dielectric substrate plate through the support columns.

According to the radiation unit provided by an embodiment of the present application, a height of the support columns is 0.1 λ to 0.3 λ, and λ is a wavelength of the radiation unit.

The present application further provides a base station antenna, including any of the above-mentioned radiation units.

In the radiation unit and base station antenna provided by the present application, the radiation arms are respectively disposed at two opposite sides of the first dielectric substrate plate, the adjacent radiation arms are coupled through the couple sheet, the serration structure is disposed at the end of each of the radiation arms, and each pair of the radiation arms is in the irregular ring shape, which extends the current path, and increases the width of frequency band while miniaturizing the radiation surface.

### BRIEF DESCRIPTION OF THE DRAWINGS

To illustrate the solutions in the present application more clearly, accompanying drawings used in the description of the embodiments of the present application are briefly introduced below. The drawings in the following description are some embodiments of the present application. For those of ordinary skill in the art, other drawings may also be obtained based on these drawings without creative effort.
FIG. 1 is an exploded view of a radiation unit according to an embodiment of the present application;
FIG. 2 is a top view of a first dielectric substrate plate according to an embodiment of the present application;
FIG. 3 is a schematic diagram of matching between a base and a balun according to an embodiment of the present application;
FIG. 4 is a schematic structural diagram of mounting a director with sheet-like structure according to an embodiment of the present application;
FIG. 5 is a standing-wave ratio curve of a radiation unit according to an embodiment of the present application; and
FIG. 6 is a schematic structural diagram of a base station antenna according to an embodiment of the present application.

### Reference numerals:

1: first dielectric substrate plate; 2: radiation arm; 21: first radiation arm; 22: second radiation arm; 23: third radiation arm; 24: fourth radiation arm; 25: fifth radiation arm; 26: sixth radiation arm; 27: seventh radiation arm; 28: eighth radiation arm; 29: serration structure; 3: couple sheet; 31: first couple sheet; 32: second couple sheet; 33: third couple sheet; 34: fourth couple sheet; 4: balun; 41: third dielectric substrate plate; 42: feed line; 5: base; 51: second dielectric substrate plate; 52: feed circuit; 53: ground circuit; 54: external cable; 6: director with sheet-like structure; 7: support column; 100: reflect plate; 110: radiation unit.

### DETAILED DESCRIPTION

To illustrate the objectives, solutions and advantages of the present application more clearer, the solutions in the present application are described clearly and completely below in combination with the drawings in the present application. The described embodiments are part of the embodiments of the present application, not all of them. All other embodiments obtained by a person of ordinary skill in the art based on the embodiments of the present application without creative effort belong to the scope of the present application.

The features with the terms "first" and "second" in the description and claims of the present application may include one or more of the features, either explicitly or implicitly. In the description of the present application, unless otherwise specified, the meaning of "multiple" is two or more. In addition, "and/or" in the description and claims represents at least one of the connected objects, and the character "/" generally represents that the front and back associated objects are in a "or" relationship.

In the description of the present application, it should be noted that the orientational or positional relationships indicated by terms such as "center", "longitudinal", "lateral", "length", "width", "thickness", "up", "down", "front", "rear", "left", "right", "vertical", "horizontal", "top", "bottom", "inside", "outside", "clockwise", "counterclockwise", "axial", "radial", "circumferential" and the like are based on the orientational or positional relationships shown in the drawings, and are merely for the convenience of describing the present application and simplifying the description, rather than indicating or implying that the apparatus or component stated must have a particular orientation, or constructed and operated in a particular orientation, and thus the terms are not to be construed as limiting the present application.

In the description of the present application, it should be noted that unless explicitly specified and limited otherwise, the terms "mounted", "connected to" and "connected" shall be understood broadly, for example, it may be fixedly connected, detachably connected, or integratedly connected; it may be either mechanically connected, or electrically connected; it may be directly connected, indirectly connected through an intermediate medium, or internal communication of two components. The specific meanings of the terms above in the present application can be understood by a person skilled in the art in accordance with specific conditions.

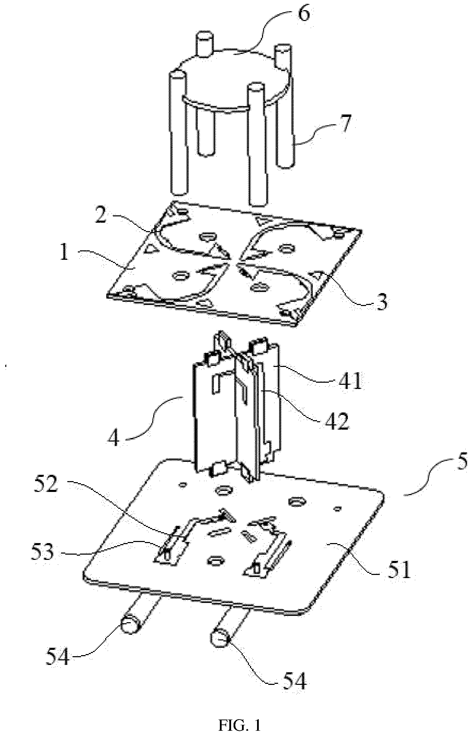

The radiation unit provided by the present application is introduced below in conjunction with FIG. 1 to FIG. 5.

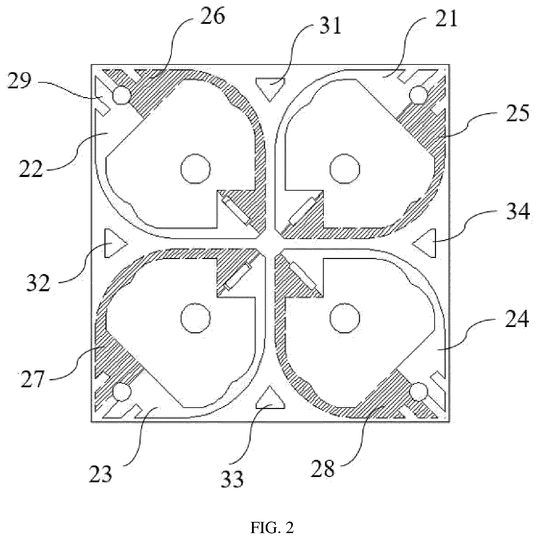

An embodiment of the present application provides a radiation unit 110. As shown in FIG. 1 and FIG. 2, the radiation unit 110 includes a first dielectric substrate plate 1, four pairs of radiation arms 2, four couple sheets 3, two baluns 4 and a base 5, where the four pairs of radiation arms 2 are orthogonally disposed at the first dielectric substrate plate 1, each pair of the radiation arms 2 are disposed at two opposite sides of the first dielectric substrate plate 1, the couple sheet 3 is disposed between two adjacent pairs of the radiation arms 2, the four pairs of radiation arms 2 are coupled and fed with the two baluns 4, the baluns 4 are connected to the base 5 for connection with feed, each pair of the radiation arms 2 is in an irregular ring shape, and an end of each of the radiation arms 2 away from a center of the first dielectric substrate plate 1 is provided with serration structure 29.

As shown in FIG. 2, the first dielectric substrate plate 1 is a rectangular thin plate. The first dielectric substrate plate 1 has an upper surface and a lower surface, and both the upper surface and the lower surface are disposed with radiation arms 2. In an embodiment, the first dielectric substrate plate 1 is disposed with a first radiation arm 21, a second radiation arm 22, a third radiation arm 23, a fourth radiation arm 24, a fifth radiation arm 25, a sixth radiation arm 26, a seventh radiation arm 27 and an eighth radiation arm 28, a total of four pairs of radiation arms 2. Among them, the first radiation arm 21, the second radiation arm 22, the third radiation arm 23 and the fourth radiation arm 24 are all disposed at the upper surface of the first dielectric substrate plate 1, as shown in the blank special-shaped arc area in FIG. 2. Among them, the first radiation arm 21 and the third radiation arm 23 are disposed along a first direction, and the second radiation arm 22 and the fourth radiation arm 24 are disposed along a second direction. The fifth radiation arm 25, the sixth radiation arm 26, the seventh radiation arm 27 and the eighth radiation arm 28 are all disposed at the lower surface of the first dielectric substrate plate 1, as shown in the shaded area in FIG. 2. Among them, the fifth radiation arm 25 and the seventh radiation arm 27 are disposed along the first direction, and the sixth radiation arm 26 and the eighth radiation arm 28 are disposed along the second direction. The first direction is perpendicular to the second direction. For example, the first direction is along the +45° direction, and the second direction is along the -45° direction. The radiation arms 2 located at the upper surface and the lower surface of the first dielectric substrate plate 1 are coupled together to expand the bandwidth.

The couple sheet 3 is disposed between two adjacent pairs of the radiation arms 2. As shown in FIG. 2, the couple sheet 3 includes a first couple sheet 31, a second couple sheet 32, a third couple sheet 33 and a fourth couple sheet 34. The first couple sheet 31 and the third couple sheet 33 are disposed along a vertical direction, and the second couple sheet 32 and the fourth couple sheet 34 are disposed along a horizontal direction. There is a gap coupling relationship between the couple sheets 3 and the radiation arms 2.

As shown in FIG. 2, in order to make the radiation surface small and integrated, the radiation arms 2 are close to a middle part in the center of the first dielectric substrate plate 1. In an embodiment, a cross section of the radiation arms 2 is an irregular and special-shaped arc shape. In an embodiment, each of the radiation arms 2 is arc-shaped, which extends the current path. In addition, an end of the radiation arm 2 away from the center of the first dielectric substrate plate 1 is provided with a plurality of serration structures 29, which further extends the current path and miniaturizes the radiation surface.

The two ends of the baluns 4 are respectively connected to the first dielectric substrate plate 1 and the base 5, which forms a support between the first dielectric substrate plate 1 and the base 5.

In the radiation unit 110 provided by the embodiment of the present application, the radiation arms 2 are respectively disposed at the two opposite sides of the first dielectric substrate plate 1, and the adjacent radiation arms 2 are coupled by the couple sheet 3. The end of each of the radiation arms 2 is provided with the serration structure 29, and each pair of the radiation arms 2 is in the irregular ring shape, which extends the current path, and increases the width of frequency band while miniaturizing the radiation surface.

In an embodiment of the present application, the first dielectric substrate plate 1 is in a square shape, and the radiation arms 2 extend along diagonal lines of the first dielectric substrate plate 1.

As shown in FIG. 2, the first dielectric substrate plate 1 is a square plate, and four pairs of the radiation arms 2 are orthogonally disposed along the diagonal lines of the first dielectric substrate plate 1, so that the current paths of the radiation arms are as long as possible.

In an embodiment of the present application, the couple sheets 3 are in a triangular shape, a rectangular shape or an annular shape, and the couple sheets 3 are coupled with the radiation arms 2 through gaps to expand the bandwidth.

As shown in FIG. 2, the couple sheets 3 are in the triangular shape, one corner of the couple sheet 3 is toward the center of the first dielectric substrate plate 1, and a side corresponding to the corner is parallel to a side of the first dielectric substrate plate 1. It should be noted that the form of the couple sheets 3 is not limited to the triangular shape, and may also be a rectangle, a ring, or an irregular shape.

In an embodiment of the present application, the two baluns 4 are orthogonally disposed. An end of each of the baluns 4 is insertedly connected to the base 5, and another end of each of the baluns 4 is insertedly connected to the first dielectric substrate plate 1.

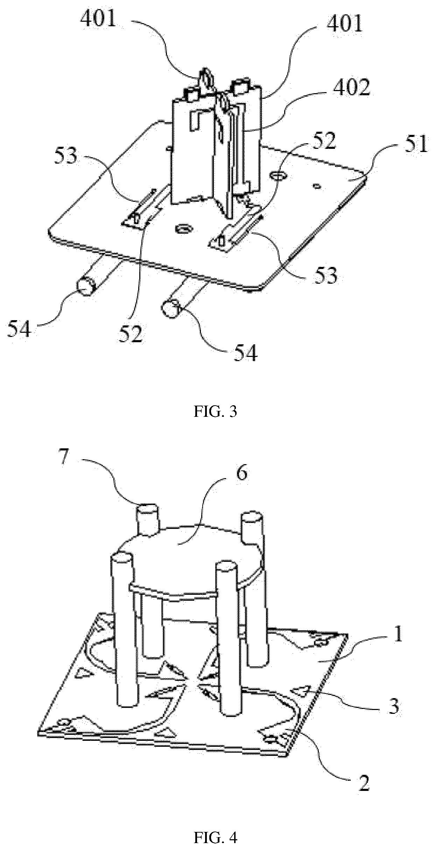

In an embodiment, the baluns 4 include a first balun 401 and a second balun 402, and the first balun 401 and the second balun 402 are disposed orthogonally. As shown in FIG. 3, the first balun 401 is provided with an insert hole, the second balun 402 is inserted into the insert hole, and then the first balun 401 and the second balun 402 are orthogonally disposed together. Connectors are respectively provided protruding from tops and bottoms of the baluns 4, and correspondingly, sockets are respectively provided at the base 5 and the first dielectric substrate plate 1. The connectors at the tops of the baluns 4 are inserted into the sockets at the first dielectric substrate plate 1, and the connectors at the bottoms of the baluns 4 are inserted into the sockets at the base 5.

In the radiation unit 110 provided by the embodiment of the present application, the two baluns 4 are disposed orthogonally, and the opposite ends of each of the baluns 4 are insertedly connected to the base 5 and the first dielectric substrate plate 1 respectively. The connection structure is simple and easy to assemble.

In an embodiment, the base 5 includes a second dielectric substrate plate 51, a feed circuit 52 and a ground circuit 53, where the feed circuit 52 is disposed at a first side of the second dielectric substrate plate 51 for connecting to an external cable 54. A second side of the second dielectric substrate plate 51 is provided with a ground layer, and the ground circuit 53 is connected to the feed circuit 52 and the ground layer.

In an embodiment, the second dielectric substrate plate 51 is a rectangular thin plate. As shown in FIG. 3, an upper surface of the second dielectric substrate plate 51 is the first side, and a lower surface of the second dielectric substrate plate 51 is the second side. Two feed circuits 52 are disposed at the first side of the second dielectric substrate plate 51. Each of the ground circuits 53 includes two stubs, and each of the feed circuits 52 includes three stubs, where a first stub of the ground circuit 53 is connected to a first stub of the feed circuit 52, and a second stub of the ground circuit 53 is connected to the ground layer. A second stub of the feed circuit 52 is used for connecting to the cable, and a third stub of the feed circuit 52 is connected to the balun 4 for connection with feed.

As shown in FIG. 3, each of the baluns 4 includes a third dielectric substrate plate 41 and a feed line 42, where the feed line 42 is disposed at a first side of the third dielectric substrate plate 41, and the feed line 42 is connected to the feed circuit 52. A second side of the third dielectric substrate plate 41 is provided with a ground connection layer, and the ground connection layer is connected to the ground layer.

In a specific configuration, the third dielectric substrate plate 41 is disposed vertically and supports between the first dielectric substrate plate 1 and the second dielectric substrate plate 51. The third dielectric substrate plate 41 includes a first side and a second side that are opposite to each other. The feed line 42 is disposed at the first side of the third dielectric substrate plate 41, and the ground connection layer is disposed at the second side of the third dielectric substrate plate 41. When the balun 4 is connected to the base 5, a bottom end of the feed line 42 is connected to the feed circuit 52 at the second dielectric substrate plate 51, and the ground connection layer is connected to the ground layer at the base 5.

In an embodiment, the feed circuit 52 and the feed line 42 are microstrip lines or strip lines.

In an embodiment of the present application, the radiation unit 110 further includes a director with sheet-like structure 6 and support columns 7, where the director with sheet-like structure 6 is mounted at the first dielectric substrate plate 1 through the support columns 7.

Referring to FIG. 4, the director with sheet-like structure 6 is in the shape of a disc, of which a size may be determined by parameter optimization. In an embodiment, the shape of the director with sheet-like structure 6 may also be rectangular, annular, or irregular.

As shown in FIG. 4, there are four support columns 7, and the four support columns 7 are evenly disposed along a circumference of the director with sheet-like structure 6. In an embodiment, the first dielectric substrate plate 1 is provided with mount holes, a bottom of each of the support columns 7 is insertedly connected and fixed to the mount hole, and then the support columns 7 are fixedly connected to the first dielectric substrate plate 1. It should be noted that the number of support columns 7 may also be two, three, etc., and the embodiments of the present application do not specifically limit the number of support columns 7.

In the radiation unit 110 provided by the embodiment of the present application, the bandwidth of the base station antenna is expanded by providing the director with sheet-like structure 6, and the directional diagram of the base station antenna may also be improved at a certain extent.

On the basis of the above embodiments, a height of the support columns 7 is 0.1 λ to 0.3 λ, where λ is a wavelength of the radiation unit.

In an embodiment, the height of the support columns 7 is 0.1 λ, 0.2 λ, 0.25 λ or 0.3 λ, etc.

As shown in FIG. 3, the second dielectric substrate plate 51 is provided with a feed end, and the feed end is connected to the second stub of the feed circuit 52.

In an embodiment, there are two feed ends, and the two feed ends are connected to the two feed circuits 52 in a one-to-one correspondence. The feed end is used to connect the external cable 54 to feed the input signal of the radiation arm 2.

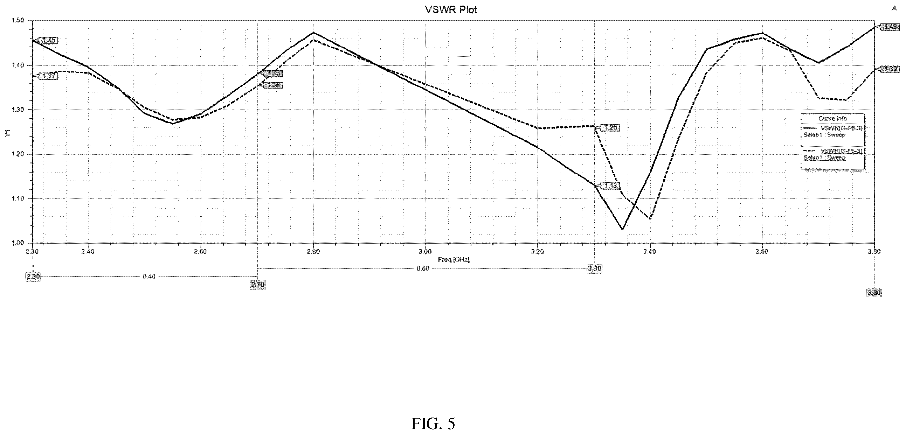

FIG. 5 is a standing-wave ratio curve of a radiation unit according to an embodiment of the present application. As shown in FIG. 5, the standing-wave ratio of the radiation unit 110 provided by the embodiment of the present application is less than 1.5 in the range of 2.3 GHz to 3.8 GHz.

An embodiment of the present application further provides a base station antenna, including the above-mentioned radiation unit 110. The base station antenna further includes a reflect plate 100, and a plurality of radiation units 110 are arranged in an array at the reflect plate 100.

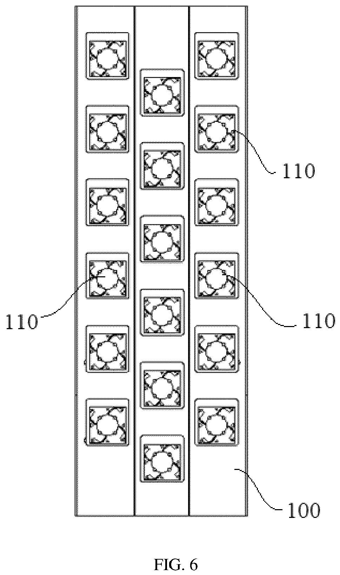

As shown in FIG. 6, the base station antenna includes 18 radiation units 110, and the 18 radiation units 110 form a 3×6 array. The radiation units 110 may also be of other numbers and arrangements. The embodiments of the present application do not specifically limit the number and arrangement of the radiation units 110.

It should be noted that the above embodiments are only used to explain the solutions of the present application, and are not limited thereto; although the present application has been described in detail with reference to the foregoing embodiments, it should be understood by those skilled in the art that they may still modify the solutions recited in the foregoing embodiments and make equivalent substitutions to a part of the features; these modifications and substitutions do not make the essence of the corresponding solutions depart from the scope of the solutions of various embodiments of the present application.

## Claims

1. A radiation unit, comprising a first dielectric substrate plate, four pairs of radiation arms, four couple sheets, two baluns and a base, wherein the four pairs of radiation arms are orthogonally disposed at the first dielectric substrate plate, each pair of the radiation arms are disposed at two opposite sides of the first dielectric substrate plate, each of the couple sheets is disposed between two adjacent pairs of the radiation arms, the four pairs of radiation arms are coupled and fed with the two baluns, the two baluns are connected to the base for connection with feed, each pair of the radiation arms is in an irregular ring shape, and an end of each of the radiation arms away from a center of the first dielectric substrate plate is provided with serration structure.

2. The radiation unit of claim 1, wherein the first dielectric substrate plate is in a square shape, and the radiation arms extend along diagonal lines of the first dielectric substrate plate.

3. The radiation unit of claim 1, wherein the couple sheets are in a triangular shape, a rectangular shape or an annular shape, and the couple sheets are coupled with the radiation arms through gaps.

4. The radiation unit of claim 1, wherein the two baluns are orthogonally disposed, an end of each of the baluns is insertedly connected to the base, and another end of each of the baluns is insertedly connected to the first dielectric substrate plate.

5. The radiation unit of claim 1, wherein the base comprises a second dielectric substrate plate, a feed circuit and a ground circuit, wherein the feed circuit is disposed at a first side of the second dielectric substrate plate for connecting to an external cable, a second side of the second dielectric substrate plate is provided with a ground layer, and the ground circuit is connected to the feed circuit and the ground layer.

6. The radiation unit of claim 5, wherein each of the baluns comprises a third dielectric substrate plate and a feed line, wherein the feed line is disposed at a first side of the third dielectric substrate plate, the feed line is connected to the feed circuit, a second side of the third dielectric substrate plate is provided with a ground connection layer, and the ground connection layer is connected to the ground layer.

7. The radiation unit of claim 6, wherein both the feed circuit and the feed line are microstrip lines or strip lines.

8. The radiation unit of claim 1, further comprising a director with sheet-like structure and support columns, wherein the director with sheet-like structure is mounted at the first dielectric substrate plate through the support columns.

9. The radiation unit of claim 8, wherein a height of the support columns is 0.1 λ to 0.3 λ, and λ is a wavelength of the radiation unit.

10. A base station antenna, comprising the radiation unit of any of claims 1 to 9.
